Europäisches Patentamt

European Patent Office

Office européen des brevets

(11) Numéro de publication: **0 196 259 B1**

(12) **FASCICULE DE BREVET EUROPEEN**

(45) Date de publication de fascicule du brevet: **24.11.93** (51) Int. Cl.⁵: **B01J 19/00**, G05B 13/04

(21) Numéro de dépôt: **86400653.1**

(22) Date de dépôt: **26.03.86**

(54) **Procédé de régulation de milieu chimique.**

(30) Priorité: **26.03.85 FR 8504503**

(43) Date de publication de la demande:
**01.10.86 Bulletin 86/40**

(45) Mention de la délivrance du brevet:
**24.11.93 Bulletin 93/47**

(84) Etats contractants désignés:
**AT BE DE FR GB IT NL SE**

(56) Documents cités:
**EP-A- 0 077 685**
**EP-A- 0 128 491**
**FR-A- 2 198 187**

**A. Schöne, "Prozessrechensysteme" pp 321-327, 428-435, 462-470, 399-410;Hanser 1981**

**W. Oppelt:"Kleines Handbuch technischer Regelvorgänge", pp 629-635, Verlag Chemie 1972**

(73) Titulaire: **COMPAGNIE FRANCAISE DE PRODUITS INDUSTRIELS**
**28, Boulevard Camélinat**
**F-92233 Gennevilliers(FR)**

(72) Inventeur: **Schapira, Joseph**
**32, rue Miollis**
**F-75015 Paris(FR)**
Inventeur: **Ken, Victor**
**1 bis, avenue Centrale**
**F-92700 Colombes(FR)**
Inventeur: **Hoessler, Christian**
**30, Boulevard du Lac**
**F-95880 Enghien(FR)**

(74) Mandataire: **Koch, Gustave et al**
**Cabinet PLASSERAUD**
**84, rue d'Amsterdam**
**F-75009 Paris (FR)**

EP 0 196 259 B1

Rank Xerox (UK) Business Services
(3.10/3.6/3.3.1)

**Description**

L'invention a pour objet un procédé permettant, d'une part, de connaitre d'avance à un instant donné le résultat auquel conduit nécessairement un milieu chimique évolutif donné et, d'autre part, d'assurer la régulation de ce milieu pour parvenir à un résultat déterminé fixé à l'avance.

On rencontre dans l'industrie de nombreux milieux chimiques qui sont évolutifs de par la variation des paramètres qui les caractérisent, à savoir concentration en les divers constituants. pH, température et autres.

A titre d'exemples de tels milieux, on peut citer
- les bains acides de conversion chimique.
- les bains alcalins ou acides de dégraissage des métaux,
- l'eau contenue dans des chaudières et installations de chauffage.
et autres.

L'utilisation de ces milieux conduit à des résultats souhaités dans certains cas et non souhaités dans d'autres et qui peuvent se traduire dans le cas des exemples susdits respectivement :
- par des propriétés plus ou moins favorables des revêtements obtenues par conversion chimique,
- par un état de propreté plus ou moins poussé des surfaces dégraissées,
- par des états d'entartrage variables des chaudières ou installations de chauffage.

Or, il importe à l'industriel de savoir à tout instant si le résultat obtenu à l'instant en question par l'utilisation du milieu correspondant est bien celui qui est attendu.

Mais la réponse est souvent longue et difficultueuse à obtenir. Ainsi, par exemple dans le cas d'un bain de conversion chimique,
- il faut disposer de 5 ou 6 semaines pour savoir si la résistance au brouillard salin du revêtement obtenu est supérieure à 1000 heures ou non,
- il faut disposer d'un matériel coûteux et encombrant (microscope électronique à balayage) pour connaitre la structure cristalline du revêtement obtenu.

Et il est bien certain qu'une fois ces tests effectués, c'est-à-dire par exemple 6 semaines plus tard, le bain a pu évoluer de manière importante, sa composition pouvant alors être très différente de celle qu'il avait au moment où avait été obtenu le revêtement testé. Il s'ensuit que la modification qu'on aurait éventuellement dû apporter au bain à l'instant en question pour faire en sorte que le résultat obtenu soit celui souhaité, se trouve en fait dépassée au moment où le résultat est connu à l'issue des tests en question.

Il existe déjà des procédés de régulation de milieux chimiques évolutifs. Mais, dans ces procédés, il est d'usage de mesurer de façon répétitive au moins l'un des paramétres d'un tel milieu, de comparer chaque fois la valeur mesurée à une valeur de consigne et d'agir sur le paramètre en question de manière à rapprocher la valeur mesurée suivante de la valeur de consigne, par exemple en ramenant, si le paramètre mesuré est un constituant du milieu évolutif, la concentration en ce constituant à la valeur de consigne par apport de produits de régénération appropriés.

Et il est bien certain que, dans un milieu chimique évolutif du genre en question, ces opérations ne peuvent garantir la constance des résultats que l'on souhaite obtenir.

Le problème que la Société Demanderesse s'est donc proposé de résoudre est celui de mettre au point un procédé propre à permettre:
- d'une part, de connaître, à partir de la mesure de divers paramètres évolutifs d'un milieu chimique évolutif, les particularités du résultat auquel conduit le milieu en question à l'instant choisi,
- d'autre part, au cas où la valeur trouvée par cette mesure montre que le résultat en question ne correspond pas à celui souhaité, qui doit être compris dans un intervalle de valeurs limité par au moins une valeur N préalablement définie, de déterminer tout d'abord un ensemble de modifications des variables ou paramètres du milieu, propre à faire en sorte que le résultat auquel conduira le milieu ainsi modifié corresponde à celui souhaité, puis apporter cet ensemble de modifications au milieu chimique évolutif en question, par action sur les paramètres concernés. Et elle a eu le mérite d'élaborer un procédé permettant d'atteindre ce but, ce procédé, qui comporte les étapes :
  - d'une part, dans un premier temps, d'établissement pour le résultat auquel conduit ce milieu,d'une équation Y dite prévisionnelle,
  - d'autre part, l'équation Y étant établie, de son utilisation pour la régulation du milieu chimique évolutif en procédant
- de manière répétitive à la mesure de chacun desdits variables ou paramètres par autant de sondes ou capteurs et

2

- au calcul à l'issue de chacune des mesures répétitives de la valeur de Y en introduisant dans l'équation prévisionnelle les valeurs mesurées pour les différents variables ou paramètres, étant caractérisé par le fait que l'equation prévisionnelle est du type

$$Y = b_0 + b_1X_1 + b_2X_2 ... + b_kX_k + ... + b_nX_n + b_{12}X_1X_2 + ... + b_{k-1,k}X_{k-1}X_k + ... + b_{kk}X_k^2 + ... + b_{nn}X_n^2 + ...$$

dans laquelle
- Y représente le résultat auquel conduit le milieu,
- $X_1$, $X_2$ ... $X_k$, ... $X_n$ représentent les variables ou paramètres réglables du milieu chimique évolutif dont dépend le résultat Y et
- $b_0$, $b_1$ ... $b_k$, ... $b_{nn}$ sont des coefficients par rapport auxquels s'exprime la linéarité de l'équation et dont la valeur est déterminée par des calculs reposant sur des méhodes de régression en elles-mêmes connues,
et en ce que l'on procède
- à la détermination par le calcul, si la valeur trouvée - pour Y ne correspond pas au résultat souhaité, de tous les ensembles de variations ou modifications à impartir aux variables ou paramètres de l'équation prévisionnelle qui sont propres à donner pour Y la valeur souhaitée et à sélectionner, parmi tous ces ensembles de variations ou modifications, c'est-à-dire parmi toutes les solutions possibles correspondantes de l'équation prévisionnelle Y, celle qui est la plus économique et la plus facile à réaliser en ayant recours à la méthode du gradient, c'est-à-dire en réalisant successivement:
  - l'initialisation du programme par introduction de l'équation Y et de la valeur N par rapport à laquelle Y est défini,
  - l'introduction des dérivées partielles $D[X_{(i)}] = \partial Y/\partial X_i$ de Y par rapport à un premier paramètre $X_i$ - puis les valeurs limites et l'algorithme du gradient avec une valeur prédéterminée, la même pour tous les X,
  - la détermination du sens de l'influence sur Y d'une première variation de l'ensemble des paramètres avant d'effectuer la recherche de l'optimum, par application de l'algorithme du gradient, étant entendu que le logigramme, d'une part, réduit le coefficient multiplicateur appliqué à la dérivée lorsque la dernière itération précédente amène à dépasser le rayon de validité et recommence le même- calcul, mais avec la valeur réduite et, d'autre part; limite le nombre de parcours de la boucle en arrêtant les itérations, des que Y est ramenée dans l'interralle de valeurs limité par N, et
  - a l'actionnement d'autant d'organes de réglage que de paramètres, en fournissant à chacun de ces organes de réglage un signal propre à amener la variable ou paramètre qui lui est associé à la valeur correspondant à la susdite solution de l'équation prévisionnelle Y la plus économique et la plus facile à obtenir.

Dans un mode de réalisation avantageux, on effectue les calculs susdits à l'aide d'une calculatrice numérique que l'on munit de bases de données appropriées.

L'invention vise encore d'autres dispositions qui s'utilisent de préférence en même temps et dont il sera plus explicitement question ci-après.

Et elle pourra, de toute façon, être bien comprise à l'aide du complément de description, du dessin y relatif et des exemples, lesdits complément de description et exemples concernant des modes de réalisation avantageux.

La figure 1 de ces dessins est un diagramme relatif à une équation Y et la figure 2 est une représentation schématique d'une installation propre à la mise en oeuvre du procédé selon l'invention.

Les figures 3a et 3b prises dans leur ensemble, d'une part. et 4a, 4b et 4c prises dans leur ensemble, d'autre part, représentent chacune un logigramme relatif à la mise en oeuvre du procédé conforme à l'invention.

La figure 5 est un schéma synoptique d'un exemple d'installation permettant de mettre en oeuvre l'invention.

Se proposant, par conséquent, de se donner les moyens permettant, d'une part, de connaitre à l'avance, à un instant donné, le résultat auquel conduit nécessairement un milieu chimique évolutif et, d'autre part, d'assurer la régulation de ce milieu pour parvenir à un résultat déterminé fixé à l'avance, on s'y prend comme suit ou de façon équivalente,

Pour un milieu chimique évolutif donné, il peut être nécessaire de connaitre à tout instant le résultat ou propriété $Y_1$ auquel il conduit, ce résultat ou propriété étant la fonction d'un certain nombre de variables $X_1$, $X_2$, ..... $X_i$, du milieu et dont dépend le résultat, $Y_1$ et les variables $X_1$, $X_2$, ``` $X_i$ étant liés par l'équation prévisionnelle

3

$$Y_1 = b_0 + b_1X_1 + ... + b_iX_i + ... + b_{ij} X_iX_j + b_{i,i}X_i^2 ...$$

dans laquelle $b_0$, $b_1$ ... $b_i$ ... sont des coefficients, au départ inconnus et déterminés de la manière qui sera indiquée plus loin, la valeur $Y_1$ effective traduisant à un moment donné le résultat auquel conduit le milieu pris dans sa composition correspondant à ce même moment.

En admettant que le résultat en question doit être par exemple égal ou supérieur à la valeur N, il faut que, pour que le milieu à l'instant envisagé puisse être considéré comme convenable, qu'à cet instant la mesure des variables $X_1$, $X_2$ ... $X_i$ fournisse pour $Y_1$ une valeur

$$Y_1 \geq N$$

la mesure des variables $X_1$, $X_2$ ... $X_i$ pouvant être effectuée par autant de capteurs ou sondes plongeant dans le milieu et affectés respectivement à chacune des variables $X_1$, $x_2$ ...$X_i$.

Si $Y_1$ ainsi mesurée est $\geq$ N, le milieu conduit au résultat souhaité ; sinon il faut apporter des modifications au milieu.

Mais avant toute chose, il faut bien entendu établir l'équation $Y_1$ et, par conséquent,
- sélectionner les variables $X_i$ que l'on considère comme étant caractéristiques du milieu (il peut s'agir de la concentration en certains constituants, de la température, du pH et autres),
- déterminer les valeurs des coefficients $b_0$ ... $b_i$ ....

Le choix des variables est déterminant pour l'obtention d'une équation prévisionnelle de bonne qualité, l'oubli d'un paramètre influent conduisant à l'établissement d'une équation erronée. Pour chaque problème posé. le choix des paramètres résulte des connaissances antérieures de l'homme de l'art.

La détermination des coefficients $b_i$ nécessite le recours à des calculs reposant sur des méthodes de régression classiques (sur lesquelles il ne sera pas insisté ici mais dont le principe peut être trouvé dans l'ouvrage de L. LEBART, A. MORINEAU. J.P. FENELON, "Traitement des données statistiques, méthodes et programmes", DUNOD) en utilisant les données fournies par un certain nombre d'expériences. Du point de vue pratique, on procède pour ce faire de la manière suivante :
- on choisit la ou les propriétés à mesurer,
- on choisit les paramètres expérimentaux ou variables qui vont décrire l'équation,
- on choisit pour chaque paramètre un domaine de variations qui est fonction du problème posé et de la connaissance antérieure de l'expérimentation,
- on choisit un modèle d'équation simple, le premier modèle choisi pouvant être du type linéaire :

$$Y_1 = b_0 + b_1 X_1 + .... + b_i X_i + .... + b_n X_n$$

ou linéaire avec interactions

$$Y_1 = b_0 + b_1X_1 + .. + b_iX_i + b_jX_j + .. + b_nX_n + .. + b_{ij}X_iX_j + ...$$

- on réalise le nombre d'expériences défini par le choix du modèle et on relève pour chacune d'elles la valeur de la réponse Y obtenue,
- on calcule les coefficients ...$b_i$... du modèle.

Le modèle est alors testé. Ce modèle étant choisi "a priori", il est en effet indispensable de le tester pour l'accepter et l'utiliser, ou bien au contraire le refuser. Pour cela, on réalise quelques expériences supplémentaires pour lesquelles les valeurs de chacun des paramètres sont fixées simultanément à égale distance des extrémités de leur domaine de variations et la réponse obtenue est comparée à la réponse calculée par le modèle. Si les deux résultats sont voisins, le modèle est accepté. Dans le cas contraire, on complique le modèle par adjonction de termes supplémentaires, par exemple des termes quadratiques.

L'équation prévisionnelle représentative du nouveau modèle s'écrit alors :

$$Y_1 = b_0 + b_1X_1 + .. + b_iX_i + b_jX_j + ... + b_{ij}X_iX_j + ... + b_{ii} X_i^2 + b_{jj} X_j^2 + ...$$

On réalise le supplément d'expériences nécessaire au calcul des coefficients des termes quadratiques et le modèle est de nouveau testé.

Ainsi, de proche en proche. par une démarche séquentielle, on affine le modèle jusqu'à ce que la prévision soit de bonne qualité.

4

L'équation ainsi établie est représentée par une hypersurface dans un espace de n + 1 dimensions pour n facteurs.

Pour matérialiser l'incidence des divers facteurs, on projette l'hypersurface successivement sur des sousespaces à trois dimensions dont deux sont constituées par deux variables que l'on désire étudier et la troisième par la réponse Y, les variables restantes étant fixées à des valeurs constantes : ceci se traduit par des courbes de niveau dans le plan des deux variables, la réponse étant matérialisée par les valeurs des courbes de niveau : ainsi on peut envisager de projeter l'hypersurface représentative de l'équation $Y_1$ sur le plan des paramètres $X_3$ et $X_4$; à titre d'exemple, on peut imaginer qu'$Y_1$ représente la résistance au brouillard salin d'une surface métallique qui a été soumise au préalable à un traitement de conversion chimique et à un revêtement par peinture, $X_3$ représentant par exemple la teneur du milieu évolutif, c'est-à-dire du bain de conversion, en ions $Zn^{++}$ et $X_4$ la teneur du même bain en ions $PO_4^{3-}$, les variables restantes $X_1$ et $X_2$ étant fixées à des valeurs constantes.

Dans ce cas, l'hypersurface se traduit dans le plan défini par $X_3$, $X_4$ par un certain nombre de courbes dites "courbes isoréponses" ou courbes de niveau et désignées par $C_1$, $C_2$ ...$C_n$, chacune de ces courbes correspondant à une valeur donnée de la résistance au brouillard salin et chaque point de chacune des courbes représentant un couple de valeurs de $X_3$ et $X_4$ qui conduit à une surface métallique ayant la résistance au brouillard salin correspondant à la courbe.

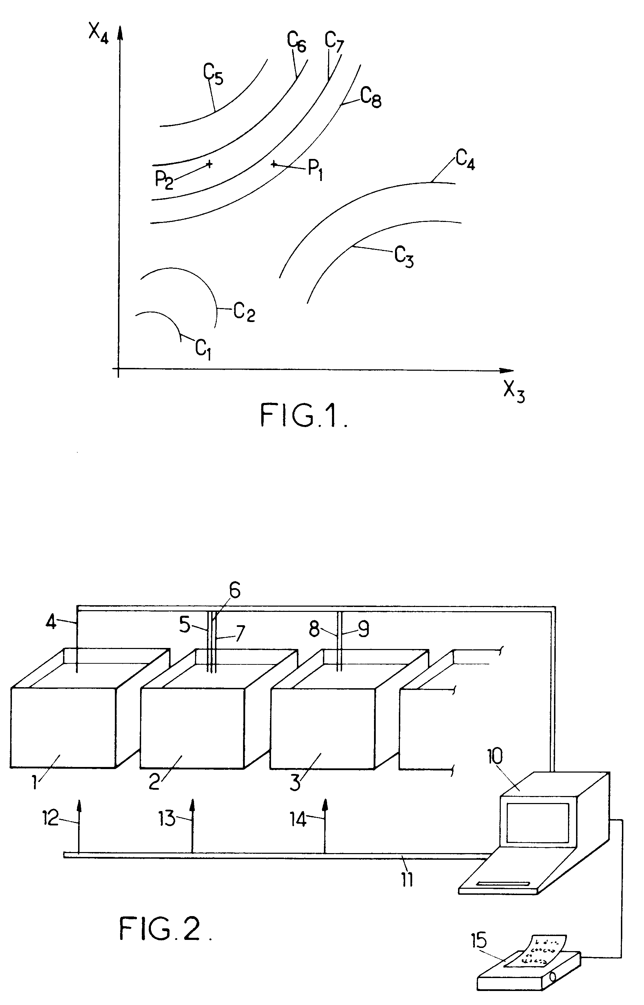

A la figure 1, on a représenté un diagramme (projection de l'hypersurface sur le plan $X_3$, $X_4$) montrant les courbes isoréponses suivantes :

courbe $C_1$ : résistance au brouillard salin de 80 h
courbe $C_2$ : résistance au brouillard salin de 100 h
courbe $C_3$ : résistance au brouillard salin de 400 h
courbe $C_4$ : résistance au brouillard salin de 500 h
courbe $C_5$ : résistance au brouillard salin de 800 h
courbe $C_6$ : résistance au brouillard salin de 900 h
courbe C7 : résistance au brouillard salin de 950 h
courbe $C_8$ : résistance au brouillard salin de 1000 h.

Si on admet que, pour être satisfaisante, la résistance au brouillard salin des surfaces traitées doit être de 950 à 1000 h, tous les couples de valeurs de $X_3$ et $X_4$ correspondant à des points situés sur l'une des courbes $C_7$ et $C_8$ ou dans la surface comprise entre ces courbes conduisent au résultat recherché.

En d'autres termes si, à un moment donné, la mesure de $X_3$ et $X_4$ conduit à un point $P_1$ répondant à cette condition, la résistance au brouillard salin de la pièce traitée sera satisfaisante : si, par contre, elle conduit à un point $P_2$ ne répondant pas à cette condition, c'est-à-dire situé en dehors du domaine défini par les courbes $C_7$ et $C_8$, le résultat ne sera pas satisfaisant et il s'agira d'apporter au milieu évolutif, c'est-à-dire au bain de conversion, une modification des concentrations $X_3$ et $X_4$ qui ramène à l'intérieur dudit domaine le point situé en$_{de}$hors de celui-ci.

Et la modification retenue parmi toutes les modifications possibles conduisant à ce résultat devra être celle qui soit la plus facile et la plus économique à réaliser.

Cette détermination est réalisée à chaque instant en effectuant les calculs nécessaires pour déterminer pour chacune des différentes variables concernées et non pas seulement $X_3$ et $X_4$, de chacune des équations prévisionnelles $Y_1$, $Y_2$ ...$Y_n$... la modification la plus simple et la plus économique parmi toutes les modifications possibles conduisant à un résultat satisfaisant.

Par exemple, on peut effectuer ces calculs à l'aide d'une calculatrice munie des bases de données nécessaires. notamment les données relatives aux équations prévisionnelles $Y_1$, $Y_2$...$Y_n$... .

Pour pouvoir effectuer l'ensemble des calculs, il convient de disposer à l'instant donné pour chaque équation prévisionnelle de l'ensemble des valeurs des paramètres correspondants. ce qui peut être réalisé dans le cadre des mesures répétitives dont il a été question plus haut par des capteurs ou sondes plongeant dans le milieu chimique évolutif considéré.

La modification est alors réalisée par l'envoi à un ensemble de dispositifs aptes à agir sur les divers paramètres, de signaux propres à déclencher un ensemble de réponses de la part de ces dispositifs, réponses qui se traduisent au niveau de chaque paramètre par un changement précis, l'ensemble de ces changements conduisant à la susdite modification, sélectionnée et déterminée par les calculs.

Pour la commodité de l'exposé, on admet dans ce qui suit et en particulier dans les exemples que le milieu chimique évolutif pris en considération est une séquence de traitements de phosphatation de bain de conversion chimique au zinc, étant bien entendu que les principes qui vont être développés en rapport avec cet exemple particulier de milieu chimique évolutif se transposent aisément à tout autre milieu chimique évolutif en tenant compte des considérations plus générales qui précèdent.

Il est connu que les bains de conversion en question comprennent des ions nickel, zinc, phosphate et sont accélérés par des nitrites et/ou des chlorates.

Par ailleurs, la séquence de traitements peut comprendre de façon classique, par exemple, un traitement de conditionnement préalable de la surface et un traitement subséquent consistant en un rinçage passivant : il va de soi que la séquence peut comprendre d'autres traitements, mais ceux-ci ne sont pas pris en considération ici pour la commodité de la description.

La figure 2 montre schématiquement une installation propre à mettre en oeuvre le procédé conforme à l'invention.

Cette installation comprend

- trois enceintes représentées schématiquement en 1, 2 et 3 et renfermant respectivement les bains de conditionnement, de conversion proprement dite et de rinçage passivant,
- six sondes ou capteurs représentés schématiquement en 4 à 9, constituées par des pH-mètres, des électrodes sélectives. des thermomètres et autres et plongeant respectivement. pour ce qui est de la sonde 4, dans l'enceinte 1, pour ce qui est des sondes 5, 6 et 7, dans l'enceinte 2 et, pour ce qui est des sondes 8 et 9, dans l'enceinte 3,
- une calculatrice 10 dans laquelle ont été d'une part introduites sous forme de programme les algorithmes de résolution des diverses équations $Y_n$ envisagées, d'autre part mémorisées les données permanentes et coefficients. cette calculatrice étant reliée aux sondes 4 à 9 dont elle peut par conséquent recevoir les valeurs mesurées par l'intermédiaire d'interfaces comportant des convertisseurs A/N,
- une chaine de commande 11 reliée à la calculatrice 10 et propre à commander, sous l'influence de signaux émis par la calculatrice et par l'intermédiaire de dispositifs schématiquement représentés par des flèches 12, 13 et 14, l'alimentation en produits notamment chimiques appropriés des diverses enceintes 1, 2 et 3 et
- éventuellement une imprimante 15 fournissant en clair les variations des diverses équations $Y_n$ sur lesquelles on entend jouer et dont les données ont été fournies à la calculatrice.

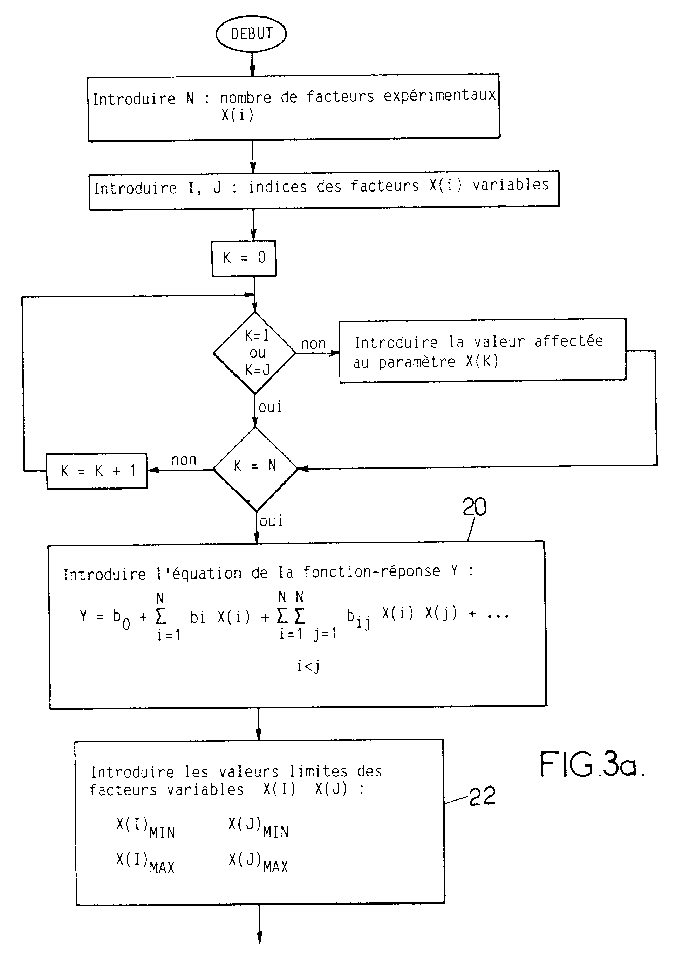

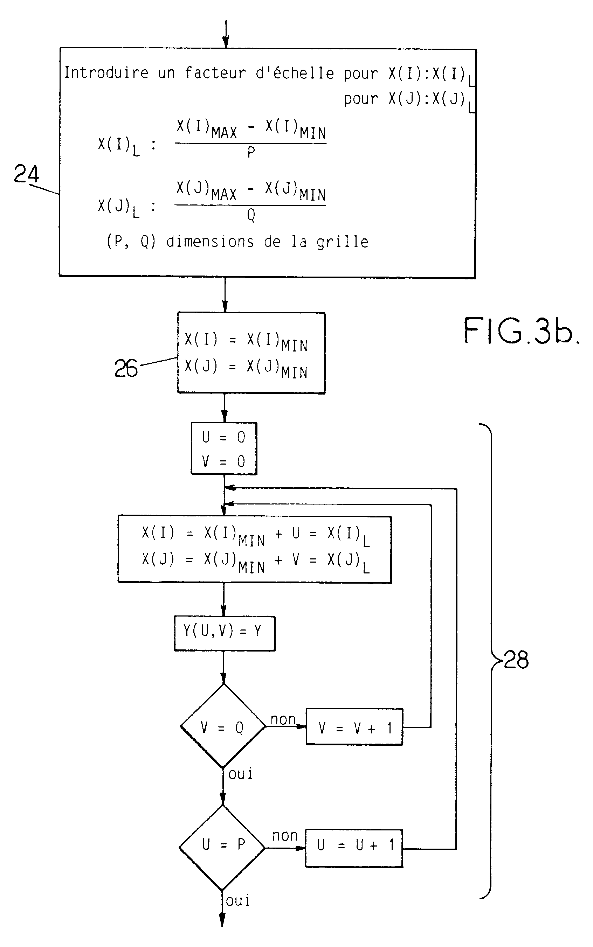

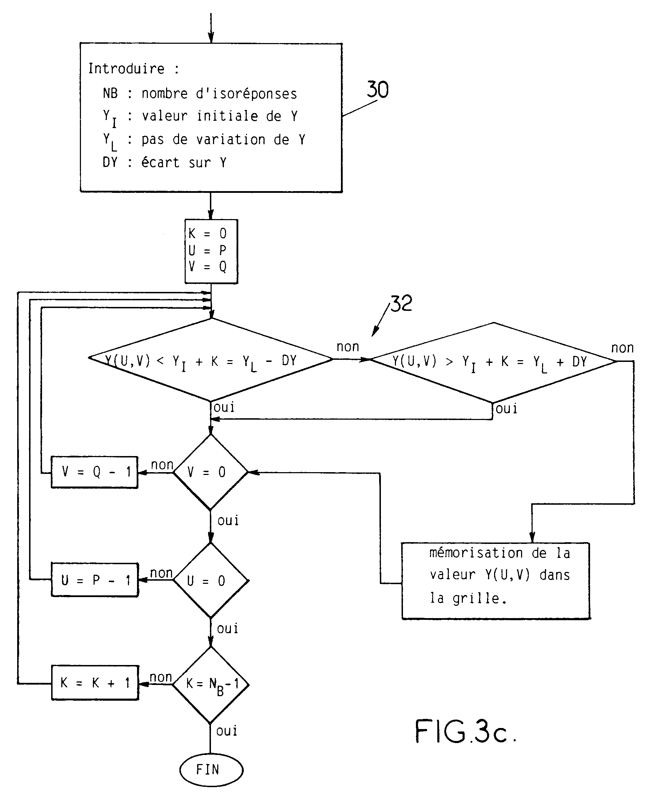

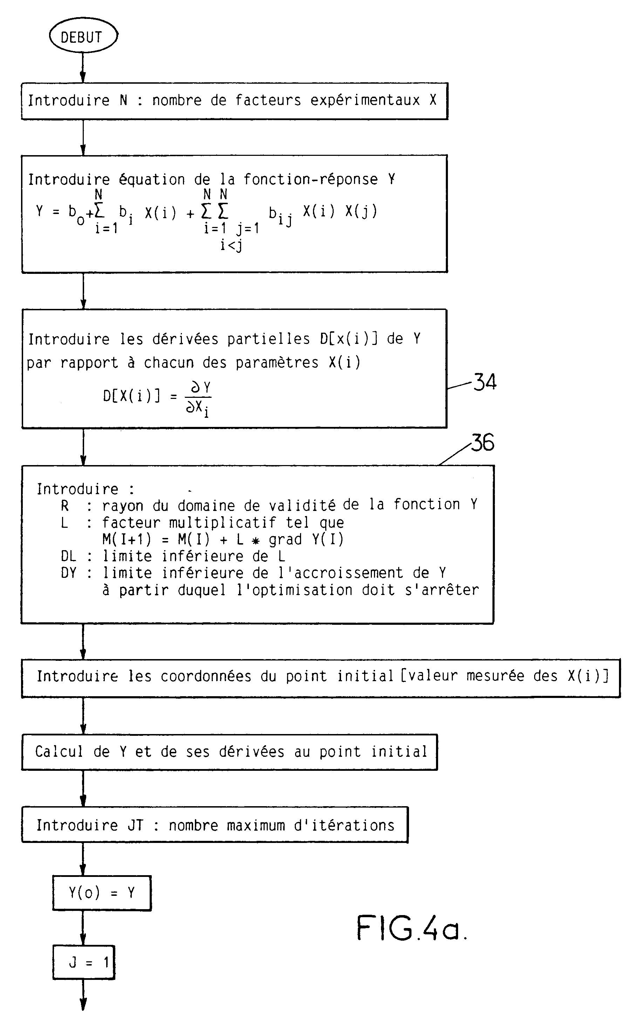

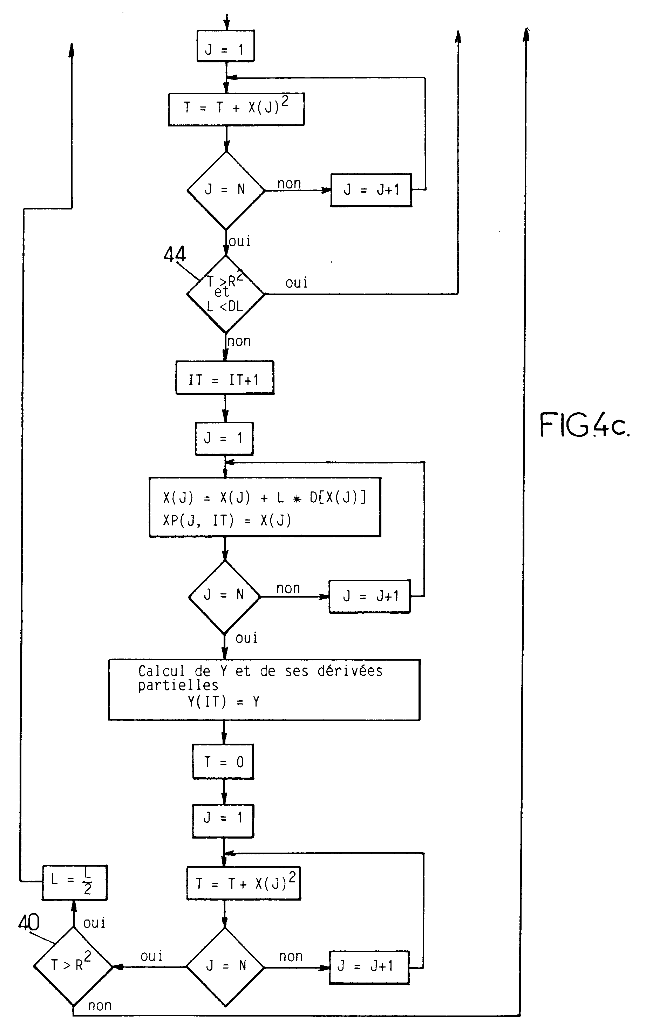

En rapport avec la susdite calculatrice, on a indiqué sur les figures 3a-3c et 4a-4c des logigrammes montrant l'une des approches possibles pour, tout d'abord, charger en mémoire de la calculatrice des courbes d'isoréponses sous forme discrète, d'autre part, rechercher l'optimum de la réponse Y par la méthode du gradient.

### Tracé et mémorisation des courbes isoréponses

Le cas illustré par le logigramme des figures 3a-3c correspond à celui d'équations polynomiales dont certains termes sont des fonctions d'un des paramètres et d'autres des fonctions de deux paramètres.

On commence par indiquer, en mémoire de travail de la calculatrice, le nombre N de facteurs expérimentaux X(i) qui interviennent dans la détermination de Y. On introduit ensuite I et J, qui sont les deux valeurs de i constituant chacun des couples pour lequel on va tracer des courbes d'isoréponses. Au cours du déroulement du programme, I et J prendront évidemment tous les couples de valeurs possibles entre 1 et N, à l'exception des couples pour lesquels I = J, et pour chaque couple (X(I), X(J)), on affectera, aux N-2 variables restantes, tous les jeux de valeurs constantes.

Une fois ce chargement effectué, on introduit (cadre 20) l'équation de la fonction réponse que, pour simplifier. on a supposé être de la forme linéaire avec interactions :

$$Y = bo + \sum_{i=1}^{i=N} b_i \, X(i) + \sum_{\substack{i=1 \\ j \neq i}}^{N} b_{ij} \, X(i) \, X(j) + \ldots$$

Avant de tracer les courbes, on va déterminer la valeur de Y pour tous les points d'une grille rectangulaire correspondant à des valeurs de X(i) et X(j) régulièrement réparties. Pour que les grilles correspondant à tous les couples de valeurs aient le même nombre de points, il faut effectuer une normalisation et un centrage tenant compte de la plage de variations possibles pour chacun des paramètres X. Cela revient à faire varier le nombre représentant chaque paramètre X entre - 1 et + 1, ce qui implique d'introduire un facteur d'échelle. Pour cela, on introduit en mémoire les valeurs limites des paramètres (cadre 22) puis on détermine, pour chaque couple de paramètres correspondant à une courbe d'isoréponse. le facteur d'échelle. Le cadre 24 correspond à une grille à P points pour X(I) et Q points pour X(J),

EP 0 196 259 B1

correspondant à un premier jeu de valeurs constantes de tous les X autres que X(I) et X(J).

Le tracé des courbes peut alors être effectué à partir des valeurs minimales prévues pour X(I) et X(J) (par exemple température ambiante, d une part, concentration nulle, d'autre part). Après initialisation à ces valeurs en 26, on effectue le calcul de tous les points en séquence, en mettant en oeuvre deux boucles imbriquées. Le cadre montré en 28 correspond à la détermination de tous les points de la grille correspondant à une valeur donnée d'un des paramètres avant de passer à une nouvelle valeur de ce paramètre pour recommencer le calcul.

On détermine ainsi les valeurs prises par Y pour tous les points de la grille. On trace ensuite les courbes d'isoréponses par une interpolation dont les paramètres sont introduits en 30. Le pas d'écartement des isoréponses (valeurs de Y pour lesquelles on veut disposer des courbes) sera choisi en fonction de la finesse d'ajustement que l'on recherche.

L'opération sera effectuée à partir des points de la grille, en utilisant un programme d'interpolation qui peut être classique.

A l'issue de l'opération, schématisée en 32, toutes les valeurs d'isoréponses seront affichées et mémorisées.

La même opération sera répétée pour tous les couples X(I), X(J) avec tous les jeux de valeurs constantes affectées aux paramètres fixes.

Une fois les données ainsi stockées dans la calculatrice, cette dernière peut être utilisée pour optimiser la fonction Y par la méthode du gradient.

Optimisation de Y par la méthode du gradient

Le logigramme montré en figures 4a à 4c reprend une fraction du logigramme précédent. Mais il ne met pas en oeuvre cette partie commune pour la totalité du domaine de variation des paramètres X, mais seulement autour du point expérimental, au lieu de repartir des valeurs minimales.

Une installation fonctionnant suivant le logigramme des figures 4a à 4c constitue donc un ensemble autonome. Ce logigramme prévoit des contraintes, visant à diminuer la durée des calculs et à éviter des réglages trop fréquents des paramètres. Le parcours des boucles de calcul est arrêté lorsque le gain sur Y obtenu par un parcours supplémentaire est inférieur à une valeur prédéterminée. De plus, les valeurs des réponses doivent rester à l'intérieur d'un domaine de validité défini par un rayon R.

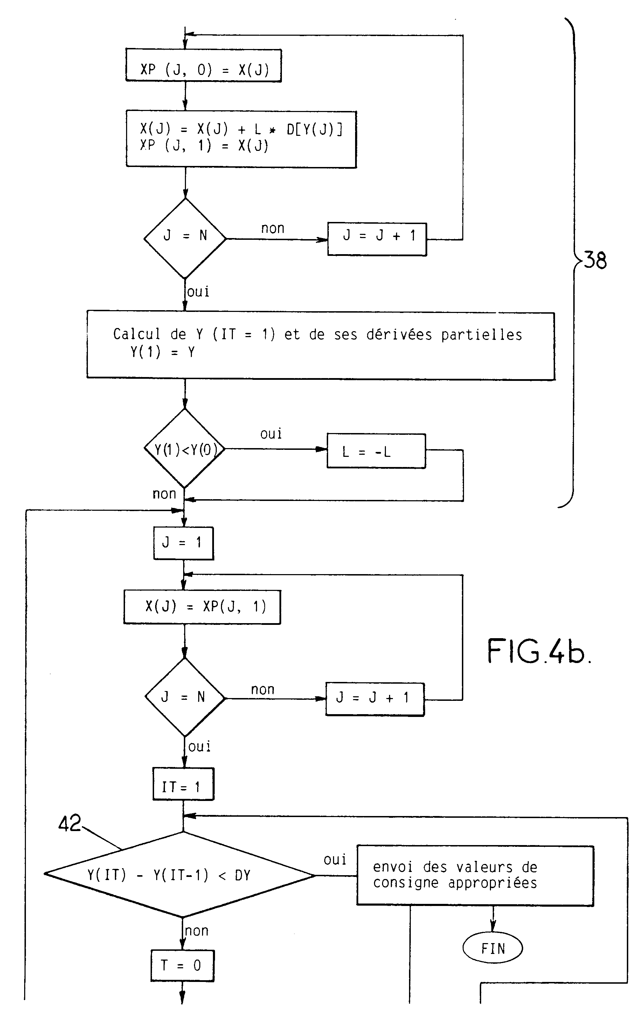

La figure 4a montre les opérations d'initialisation du programme, On introduit N et l'équation de la fonction-réponse Y, c'est-à-dire des données identiques à celles utilisées au début du programme de tracé de courbes. Pour appliquer la méthode du gradient, on introduit ensuite les dérivées partielles $D[X_{(i)}] = \partial Y/\partial X_i$ de Y par rapport à un premier paramètre $X_i$ (cadre 34) puis les valeurs limites et l'algorithme du gradient (cadre 36) avec une valeur prédéterminée, la même pour tous les X. On détermine ensuite en 38 (figure 4b) le sens de l'influence sur Y d'une première variation de l'ensemble des paramètres avant d'effectuer la recherche de l'optimum, par application de l'algorithme du gradient. Il est important de remarquer que le logigramme réduit le coefficient multiplicateur appliqué à la dérivée lorsque la dernière itération précédente amène à dépasser le rayon de validité R et recommence le même calcul, mais avec la valeur réduite. Dans l'exemple représenté, cette réduction est faite dans un rapport 2. Si le nouveau calcul conduit encore à dépasser le rayon R, une nouvelle réduction dans le même rapport est appliquée : la précision est ainsi très accrue.

Le logigramme limite par ailleurs le nombre de parcours de la boucle en arrêtant les itérations dès que l'on arrive à proximité de l'optimum, ce qui se traduit par le fait que la différence entre deux résultats successifs est inférieure à un seuil DY ou que, à la fois, on a dépassé le rayon R et que le coefficient L appliqué à la dérivée dans l'algorithme du gradient est tombé au-dessous d'une valeur déterminée (test 44, figure 4c).

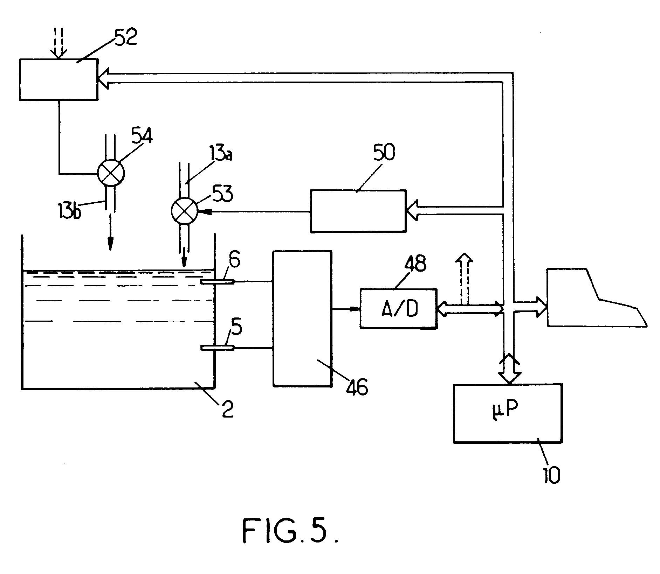

La figure 5 montre, à titre de simple exemple, une installation susceptible de mettre en oeuvre le procédé qui vient d'être défini. Sur cette figure, les organes correspondant à ceux de la figure 2 sont désignés par le même numéro de référence.

Dans la réalisation montrée en figure 5, un circuit 46 de scrutation périodique échantillonne, par exemple une fois par heure, les paramètres X, qui dans le cas illustré sont au nombre de deux et fournis respectivement par les sondes 5 et 6. La valeur échantillonnée est appliquée à un convertisseur analogique-numérique 48 et envoyée à un organe de calcul 10, qui peut être un microprocesseur ou un automate programmable. Les nouvelles valeurs de consigne des paramètres X élaborées par l'organe de calcul 10 sont envoyées à des cartes 50 et 52 de réglage des paramètres. Dans les systèmes à cinétique lente. se prêtant mal à une régulation. la carte 50 pourra être prévue pour élaborer, à partir de données connues sur le système. de la valeur de consigne qui vient d'être fournie par l'organe de calcul 10 et de la valeur réelle

7

EP 0 196 259 B1

fournie par la sonde 5. la quantité de réactif à ajouter au système pour obtenir la valeur de consigne. L'opération de réglage peut alors être effectuée par commande d'ouverture d'une vanne 52 pendant une durée déterminée. Dans le cas où la cinétique est plus rapide. on peut utiliser une carte 52 qui reçoit également. en vue d'une régulation. un signal de sortie provenant du convertisseur 48, le circuit de scrutation 46 fournissant alors en permanence la valeur du paramètre correspondant. afin de permettre d'en suivre l'évolution. La carte 52 arrête alors l'ouverture de la vanne correspondante 54 dès que la valeur de consigne est atteinte.

C'est en mettant en oeuvre les procédé et installation conformes à l'invention qu'on a réalisé les exemples suivants.

EXEMPLE 1 - Détermination des équations prévisionnelles représentatives de deux propriétés d'une surface métallique traitée dans un bain de conversion chimique.

Dans cet exemple, il a été choisi de modéliser et donc de prévoir deux propriétés d'un revêtement de conversion couramment mesurées en contrôle dans les traitements de phosphatation, à savoir :
- le poids de couche exprimé en $g/m^2$,
- la densité de structure cristalline exprimée en nombre de cristaux par unité de surface et mesurée à l'aide d'une photographie prise au microscope électronique à balayage avec un grossissement de 1500 fois.

Cinq variables $X_1$ à $X_5$ du bain de conversion ont été prises en considération :

$X_1$ : concentration en ions nickel
$X_2$ : concentration en ions chlorate
$X_3$ : concentration en ions zinc
$X_4$ : concentration en ions phosphate
$X_5$ : valeur de l'acidité libre ou AcL

étant entendu que, par AcL, on désigne la valeur obtenue exprimée en ml de NaOH N/10 sur un échantillon de 10 ml du bain dosé par NaOH N/10 au virage de l'hélianthine.

Des éprouvettes en tôle d'acier laminé à froid de qualité courante sont traitées suivant une gamme au trempé à base de produits commercialisés par la Société Demanderesse et couramment employés dans l'Industrie Automobile pour la préparation des carrosseries avant peinture.

Les étapes et produits mis en oeuvre comprennent
- un dégraissage alcalin à chaud avec utilisation des agents dégraissants à base de sels alcalins et de tensio-actifs commercialisés par la Société Demanderesse respectivement sous les marques de fabrique "RIDOLINE 1550 CF/2" et "RIDOSOL 550 CF",
- un rinçage froid à l'eau courante,
- un conditionnement de surface avec utilisation d'un agent d'affinage à base de sel de titane commercialisé par la Société Demanderesse sous la marque de fabrique "FIXODINE 5",
- un traitement de conversion chimique avec utilisation d une solution acide à base de phosphate de zinc et autres ions classiques commercialisée par la Société Demanderesse sous la marque de fabrique "GRANODINE 908",
- un rinçage à froid,
- un rinçage passivant avec utilisation d'un agent à base d'ions chrome commercialisé par la Société Demanderesse sous la marque de fabrique "DEOXYLYTE 41",
- un étuvage.

Les cinq variables du bain de conversion chimique qui sont prises en considération sont mesurées par tout moyen classique habituellement utilisé : dosage chimique. pH-métrie, potentiométrie. conductivité ionique et autres.

On effectue 16 expériences pour déterminer les constantes de l'équation prévisionnelle correspondante qui s'écrit :

$$Y_1 = b_0 + b_1 X_1 + b_2 X_2 + b_3 X_3 = b_4 X_4 + b_5 X_5 + b_{12} X_1 X_2 + b_{13} X_1 X_3 + b_{14} X_1 X_4 + b_{15} X_1 X_5 + b_{23} X_2 X_3 + b_{24} X_2 X_4 + b_{25} X_2 X_5 + b_{34} X_3 X_4 + b_{35} X_3 X_5 + b_{45} X_4 X_5$$

et on mesure pour chaque expérience
- le poids de couche de chaque éprouvette traitée. par dissolution du revêtement dans une solution d'acide chromique à chaud (à 10 %. 60 °C, 15 minutes),
- le nombre de cristaux présents à l'intérieur d'une fenêtre de 7.5 cm de diamètre de chaque éprouvette traitée, ces cristaux étant comptés à partir d'une photographie prise au microscope

8

électronique à balayage avec un grossissement de 1500 fois.

Pour déterminer les caractéristiques de ces expériences de façon à pouvoir déterminer les susdites constantes, on procède comme suit :

Pour chacun des cinq facteurs pris en considération, on définit un domaine de variations comme suit :

$0.8$ g/l $\leq Zn^{++} \leq 1,4$ g/l

$15$ g/l $\leq PO_4^{3-} \leq 23$ g/l

$0.3$ g/l $\leq ClO_3 - \leq 0,9$ g/l

$0,5$ g/l $\leq Ni^{++} \leq 0.8$ g/l

$0.9$ ml NaOH N/10 $\leq$ AcL $\leq 1,3$ ml NaOH N/10.

Compte tenu de l'équation précédente, il faut déterminer

$$\frac{p \ (p+1)}{2}$$

coefficients liés aux termes du 1er degré et aux termes rectangles (p représentant le nombre de paramètres avec, dans le cas présent p = 5), auxquels vient s'ajouter le terme constant. Cela conduit à réaliser les 16 expériences figurant dans le tableau suivant pour lesquelles chacun des paramètres ne prend que les valeurs extrêmes de son domaine de variation.

| Exp. $nb_1$ | $Ni^{++}$ | $ClO_3-$ | $Zn^{++}$ | $PO_4^{3-}$ | AcL | $Y_1$ p.d.c. (g/m2) | $Y_1$ n.c. |
|---|---|---|---|---|---|---|---|
| 1 | 0,5g/l | 0,3g/l | 0,8g/l | 15g/l | 1,3ml | 1.74 | 147 |
| 2 | 0,5g/l | 0,9g/l | 0,8g/l | 15g/l | 0,8ml | 1,14 | 160 |
| 3 | 0,8g/1 | 0,9g/l | 0,8g/l | 15g/l | 1,3ml | 1,19 | 168 |
| 4 | 0,5g/l | 0,3g/l | 1,4g/l | 15g/l | 0,8ml | 1,61 | 117 |
| 5 | 0,5g/l | 0,9g/l | 1,4g/l | 15g/l | 1,3ml | 1,78 | 91 |
| 6 | 0,8g/l | 0,3g/l | 0,8g/l | 23g/l | 1,3ml | 1.39 | 128 |
| 7 | 0,5g/l | 0,3g/l | 1,4g/l | 23g/l | 1,3ml | 1.86 | 101 |
| 8 | 0,8g/l | 0,9g/l | 1,4g/l | 15g/l | 0,8ml | 1,29 | 81 |
| 9 | 0,8g/l | 0,9g/l | 0,8g/l | 23g/l | 0,8ml | 1,19 | 205 |
| 10 | 0.8g/l | 0,9g/l | 1,4g/l | 23g/l | 1,3ml | 1,41 | 66 |
| 11 | 0,5g/l | 0,9g/l | 1,4g/l | 23g/l | 0,8ml | 1,61 | 88 |
| 12 | 0,5g/l | 0,9g/l | 0,8g/l | 23g/l | 1,3ml | 1,36 | 157 |
| 13 | 0,5g/l | 0,3g/l | 0,8g/l | 23g/l | 0,8ml | 1,34 | 126 |
| 14 | 0,8g/l | 0,3g/l | 0,8g/l | 15g/l | 0,8ml | 1,39 | 181 |
| 15 | 0.8g/l | 0,3g/l | 1,4g/l | 23g/l | 0,8ml | 1,81 | 97 |
| 16 | 0,8g/l | 0,3g/l | 0,8g/l | 15g/l | 0,8ml | 1,91 | 90 |

Pour s'affranchir des unités de facteurs, pour simplifier les calculs et les interprétations et pour comparer les effets des facteurs entre eux, les valeurs de chaque facteur sont centrées et réduites.

Le calcul des coefficients $b_i$ se fait alors par la méthode des moindres carrés décrite en détail dans l'ouvrage cité précédemment. Seuls sont pris en compte dans l'équation, les coefficients les plus influents.

Après traitement des données, les équations des deux propriétés du revêtement, à savoir respectivement le poids de couche pdc et le nombre de cristaux nc par unité de surface, s'écrivent :

$Y$ pdc = $1,50 + 0,16 \ X_3 - 0,13 \ X_2 + 0,079 \ X_5 - 0,070 \ X_4 X_5$ (I) $Y$ nc = $119 - 39 \ X_3 - 17 \ X_2 \ X_3 - 14 \ X_1 X_3 + 10 \ X_2 \ x_4$ (II)

EXEMPLE 2 - Détermination de l'équation prévisionnelle représentative d'une propriété d'une surface métallique traitée dans un bain de conversion chimique.

La propriété prise en considération est toujours le poids de couche.

Pour la détermination de l'équation correspondante, on peut prendre en compte non seulement des constituants chimiques mais aussi des facteurs physiques tels que la température, la vitesse d'agitation et autres, ou bien des paramètres discrets tels que la nature ou l'état de surface d'un substrat.

Dans le cas présent, on a déterminé l'équation Ypdc à partir de sept variables.

Six de ces variables, respectivement $X_1$, $X_2$, $X_3$, $X_4$, $X_5$ et $X_7$, concernent le bain de conversion chimique, à savoir :
- $X_1$ : concentration en ions zinc
- $X_2$ : concentration en ions chlorate
- $X_3$ : concentration en ions phosphate
- $X_4$ : taux d'accélérateur (nitrite de sodium)
- $X_5$ : température du bain
- $X_7$ : valeur de l'acidité libre

la septième $X_5$, représentant la concentration du bain de conditionnement de surface relatif à l'étape qui précède le traitement de conversion chimique proprement dit.

En opérant comme à l'exemple 1 quant au mode opératoire, l'équation Y pdc obtenue s'écrit :

$$Y\ pdc\ =\ 2{,}15 - 0{,}19\ X_5\ +\ 0{,}16\ X_1 - 0{,}13\ X_2\ +\ 0{,}13\ X_5\ +\ 0{,}11\ X_3 - 0{,}10\ X_4\ +\ 0.07\ X_7 \qquad (III).$$

EXEMPLE 3 - Exemples pratiques d'application.

Un revêtement de conversion chimique tel que celui obtenu avec l'agent de conversion commercialisé par la Société Demanderesse sous la marque "GRANODINE 908" doit réaliser l'adéquation suivante :
- son épaisseur ou poids de couche doit être suffisamment faible, de l'ordre de 2 à 2,5 g/m$^2$, pour permettre une bonne adhérence de la peinture,
- sa structure cristalline doit être la plus dense et la plus régulière possible pour minimiser la porosité et pour améliorer la protection qu'il confère contre la corrosion.

C'est cette adéquation "adhérence peinture-densité de structure cristalline" qu'il est proposé de résoudre à l'aide de l'équation indiquée à l'exemple 2.

De façon générale, les paramètres d'un tel bain varient suivant les fourchettes ci-dessous :

$0{,}8$ g/l $<$ $Zn^{++}$ $<$ $1`4$ g/l

$15$ g/l $<$ $PO_4$ $<$ $23$ g/l

$0{,}3$ g/l $<$ $Cl0_3$ $<$ $0{,}9$ g/l

$0{,}5$ g/l $<$ $Ni$ $<$ $0{,}8$ g/l

$0{,}9$ ml NaOH N/10 $<$ AcL $<$ $1{,}3$ ml NaOH N/10

$50°C$ $<$ température du bain de conversion $<$ $60°C$

$1{,}0$ ml $<$ taux d'accélérateur $<$ $2{,}0$ ml

$1{,}0$ g/l $<$ concentration du bain de conditionnement de surface "FIXODINE 5" $<$ $3{,}0$ g/l.

On mesure tous les paramètres $X_1$-$X_7$ à des instants successifs, par exemple à intervalles d'une demi-heure. Par exemple :

a) Mesure à l'instant $t_1$ :

Concentration du bain de conditionnement de surface: 2 g/l Paramètres du bain de conversion chimique :

$Zn^{++}$ : 0,8 g/l

$Cl0_3$- : 0,6 g/l

$PO_4{}^{3-}$ : 19 g/l

taux d'accélérateur : 1,5 ml

température : 55°C

acidité libre : 0,9 ml.

On introduit cette série de valeurs dans l'équation [III] Y pdc, après les avoir centrées et réduites :

$$Y\ pdc\ =\ 2{,}15 - 0{,}19\ X_5\ +\ 0{,}16\ X_1 - 0{,}13\ X_2\ +\ 0{,}13\ X_5\ +\ 0{,}11\ X_3 - 0{,}10\ X_4\ +\ 0{,}07\ X_7 \qquad (IV)$$

On obtient alors, pour l'instant $t_1$ :

Y pdc = 2,06 $g/m^2$.

Cette valeur de poids de couche qu'on obtiendra se situe bien dans la fourchette comprise entre 2 et 2,5 $g/m^2$ qui a été préconisée précédemment pour l'obtention d'une bonne adhérence de la peinture.

Il n'y a donc pas lieu d'intervenir sur les paramètres.

b) Mesure à l'instant $t_2$ :

Concentration du bain de conditionnement de surface: 1 g/l Paramètres du bain de conversion chimique :

$Zn^{++}$ : 1,4 g/l $(X_1)$

$ClO_3$- : 0,3 g/l $(X_2)$

$PO_4^{3-}$ : 19 g/l $(X_3)$

taux d'accélérateur : 1,0 ml

température : 55°C

acidité libre : 1,0 ml.

En introduisant cette série de valeurs dans l'équation (IV), on trouve Y pdc = 2,77 $g/m^2$.

Cette valeur calculée est hors de la fourchette acceptable. Elle traduit une dérive d'un ou de plusieurs paramètres qu'il convient de corriger pour l'ajustement le plus économique.

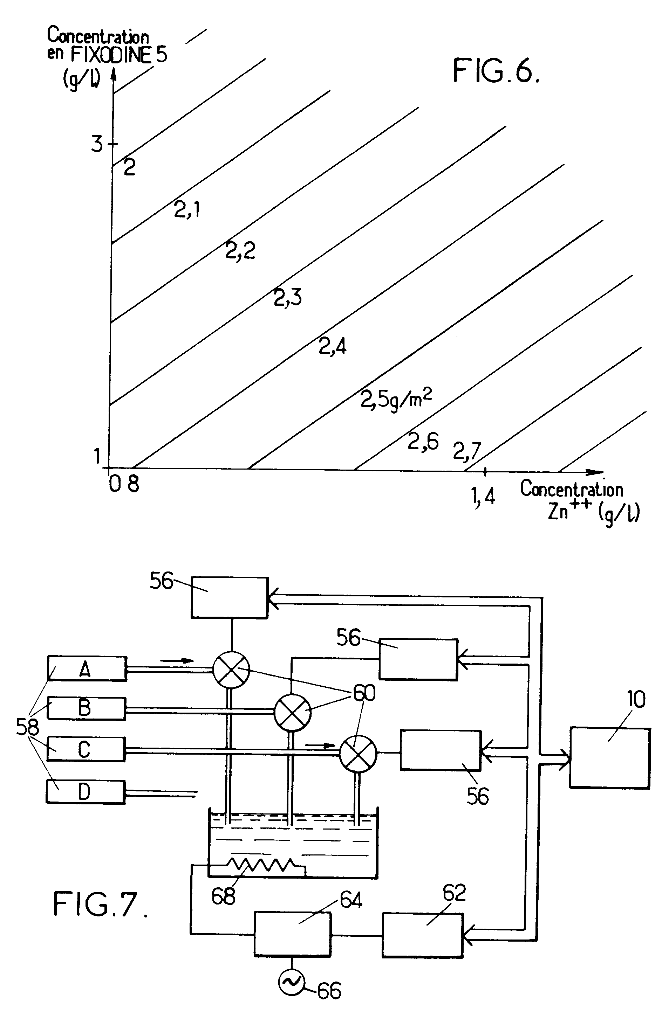

Pour cela, on utilisera les projections de l'hypersurface à 8 dimensions représentant l'équation (III) sur les plans correspondant chacun à deux paramètres. Par exemple, la figure 6 montre, pour des valeurs constantes de $X_2$, $X_3$, $X_4$, $X_5$ et $X_7$ correspondant à la mesure à l'instant $t_2$, les courbes d'isoréponse, ou courbes de niveau, dans le plan $X_1$, $X_5$, où :

$X_1$ est la teneur en ions $Zn^{++}$ du bain de conversion,

$X_5$ est la teneur en FIXODINE 5 du bain de conditionnement de surface.

Chaque courbe de niveau correspond à une même valeur du poids de couche Y (indiqué en $g/m^2$). Les valeurs des autres paramètres sont :

$X_2$ : 0,3 g/l de $ClO_3^-$

$X_3$ : 19 g/l de $PO_4^{3-}$

$X_4$ : 1 ml d'accélérateur

$X_5$ : 55°C

$X_7$ : 1,0 ml d'acidité libre.

La calculatrice va alors intervenir pour déterminer, à partir des valeurs de X, les variations optimales à provoquer dans le bain de conversion chimique et/ou le bain de conditionnement pour ramener Y dans la plage acceptable, par exemple à une valeur proche de 2 $g/m^2$.

Pour cela, à chaque scrutation, toutes les valeurs X sont introduites en mémoire de travail, soit automatiquement, soit manuellement à la fin d'une analyse d'échantillon du bain. La calculatrice cherche alors, par la méthode du gradient, les variations optimales de chacun des paramètres conduisant à l'obtention de la valeur de poids de couche voulue.

On rappelle que la méthode du gradient permet d'effectuer des déplacements sur l'hypersurface en chaque point perpendiculairement aux courbes isoréponses, le gradient étant la direction qui permet de se déplacer le plus rapidement vers un optimum,

On appelle gradient d'une fonction u = f (x,y,z), le vecteur dont les projections sur les axes de coordonnées sont les dérivées partielles correspondantes de la fonction donnée.

$$\text{grad } u = \frac{du}{dx}\vec{i} + \frac{du}{dy}\vec{j} + \frac{du}{dz}\vec{k}$$

i, j, k représentant les vecteurs unitaires du système de référence choisi.

Le gradient d'une fonction de trois variables est en chaque point dirigé suivant la normale à la surface passant par ce point. La direction du gradient d'une fonction en un point donné est la direction suivant laquelle la fonction a la plus grande vitesse de croissance en ce point, c'est-à-dire pour I = grad u la dérivée $\frac{du}{dI}$ atteint sa plus grande valeur qui est égale à :

$(\frac{du}{dx})^2 + (\frac{du}{dy})^2 + (\frac{du}{dz})^2$

De même on définit le gradient d'une fonction à n variables u = f (x,y,z....,n)

$$\text{grad } u = \frac{du}{dx}\vec{i} + \frac{du}{dy}\vec{j} + \frac{du}{dz}\vec{k} + \ldots + \frac{du}{dn}\vec{n}$$

Celui-ci est en chaque point dirigé suivant la normale à l'hypersurface passant par ce point.

Après traitement, la calculatrice fournit les valeurs optimales :

$X_1$ : 1,09 9/l de $Zn^{++}$

$X_2$ : 0,56 g/l de $ClO_3{}^{-}$

$X_3$ : 16 g/l de $PO_4{}^{3-}$

$X_4$ : 1,33 ml

$X_5$ : 51 °C

$X_5$ : 2,25 g/l

$X_7$ : 0,91 ml

correspondant à Y = 1,94 $g/m^2$ (choisie inférieure à l'optimum étant donné la poursuite de l'évolution).

On supposera maintenant que l'ajustement doit se faire par

- apport de FIXODINE 5 dans le bain de conditionnement, sous forme d'un prémélange aqueux contenant 3 g/l de constituants actifs,
- apport en produit phosphatant réalisé à partir de deux solutions aqueuses concentrées :
  - . l'une A permettant la régénération du bain de conversion en fonctionnement normal, contenant des ions $Zn^{++}$, $PO_4{}^{3-}$, $Ni^{++}$, par exemple dans la formulation suivante (% en poids)

    $3,0 < Zn^{++} < 6,5$

    $30 < H_3PO_4 < 45$

    $0,1 < Ni^{++} < 1,9$

    dont l'acidité libre est comprise entre 3 et 11 ml de NaOH N (prise d'essai (p.e.): 1 ml) et l'acidité totale est comprise entre 9,8 et 13,4 ml de NaOH N (prise d'essai : 1 ml),
  - . l'autre B permettant de corriger les augmentations de l'acidité libre et de la concentration en zinc du bain et contenant des ions $PO_4{}^{3-}$, $Ni^{++}$, par exemple, dans la formulation suivante :

    $30 < NaH_2PO_4 < 40$

    $0,1 < Ni^{++} < 1$

    $4,2 < pH < 3,8$

    $3 < AcT < 5$ ml NaOH N (p.e. 1 ml)
- apport en accélérateurs dans le bain de conversion chimique réalisé séparément à partir de solutions aqueuses concentrées :
  - . l'une C contenant des ions nitrites dans une formulation comprise, par exemple, entre 16 et 20 %,
  - . l'autre D contenant des ions chlorates dans une formulation comprise, par exemple, entre 20 et 30%.

L'ajustage du bain de conditionnement de surface peut s'effectuer de façon très simple. Le calculateur 10 envoie à (a carte de commande correspondante une valeur représentative de l'augmentation de teneurs à obtenir, c'est-à-dire 2,25-1 = 1.25 g/l. La carte comporte un microprocesseur ou simplement une mémoire morte de codage qui détermine, à partir de cette valeur et du volume du bain, le volume de prémélange à ajouter et ouvre une électrovanne à débit constant d'amenée de prémélange pendant la durée nécessaire.

L'ajustage du bain de conversion est un peu plus complexe. La calculatrice détermine les apports de solutions A, B, C et D requis pour amener le bain à la composition requise et envoie les informations correspondantes aux cartes de commande 56. Chacune de ces cartes comporte un circuit de détermination de la durée d'apport nécessaire à partir d'un réservoir correspondant 58 et un circuit de puissance qui ouvre l'électrovanne appropriée 60 pendant le temps requis.

Une autre carte 62, adressable comme les cartes 56. reçoit l'information de température et commande un circuit de commutation 64 réglant la puissance électrique appliquée par une source 66 à une résistance chauffante 68, dans le sens de la diminution dans le cas considéré.

Il est également possible de réguler un bain du genre en question en effectuant un compromis entre plusieurs propriétés.

Ainsi, on peut utiliser simultanément les équations prévisionnelles Y pdc (I) et Y nc (II) de l'exemple 1. Le système permet alors de faire évoluer les paramètres simultanément pour obtenir le meilleur compromis entre le poids de couche et la densité de structure.

**Revendications**

1. Procédé propre à permettre:
   - d'une part, de connaître, à partir de la mesure de divers paramètres évolutifs d'un milieu chimique évolutif, les particularités du résultat auquel conduit le milieu en question à l'instant choisi,
   - d'autre part, au cas où la valeur trouvée par cette mesure montre que le résultat en question ne correspond pas à celui souhaité, qui doit être compris dans un intervalle de valeurs limité par au moins une valeur N préalablement définie, de déterminer tout d'abord un ensemble de modifications des variables ou paramètres du milieu, propre à faire en sorte que le résultat auquel conduira le milieu ainsi modifié corresponde à celui souhaité, puis apporter cet ensemble de modifications au milieu chimique évolutif en question, par action sur les paramètres concernés,
   ce procédé, qui comporte les étapes :
   - d'une part, dans un premier temps, d'établissement pour le résultat auquel conduit ce milieu, d'une équation Y dite prévisionnelle,
   - d'autre part, l'équation Y étant établie, de son utilisation pour la régulation du milieu chimique évolutif en procédant
   - de manière répétitive à la mesure de chacun desdits variables ou paramètres par autant de sondes ou capteurs et
   - au calcul à l'issue de chacune des mesures répétitives de la valeur de Y en introduisant dans l'équation prévisionnelle les valeurs mesurées pour les différents variables ou paramètres,
   étant caractérisé par le fait que l'équation prévisionnelle est
   du type

   $$Y = b_0 + b_1X_1 + b_2X_2 ... + b_kX_k + ... + b_nX_n + b_{12}X_1X_2 + ... + b_{k-1,k}X_{k-1}X_k + ... + b_{kk}X_k^2 + ... + b_{nn}X_n^2 + ...$$

   dans laquelle
   - Y représente le résultat auquel conduit le milieu,
   - $X_1$, $X_2$ ... $X_k$, ... $X_n$ représentent les variables ou paramètres réglables du milieu chimique évolutif dont dépend le résultat Y et
   - $b_o$, $b_1$ ... $b_k$, ... $b_{nn}$ sont des coefficients par rapport auxquels s'exprime la linéarité de l'équation et dont la valeur est déterminée par des calculs reposant sur des méhodes de régression en elles-mêmes connues,
   et en ce que l'on procède
   - à la détermination par le calcul, si la valeur trouvée pour Y ne correspond pas au résultat souhaité, de tous les ensembles de variations ou modifications à impartir aux variables ou paramètres de l'équation prévisionnelle qui sont propres à donner pour Y la valeur souhaitée et à sélectionner, parmi tous ces ensembles de variations ou modifications, c'est-à-dire parmi toutes les solutions possibles correspondantes de l'équation prévisionnelle Y, celle qui est la plus économique et la plus facile à réaliser en ayant recours à la méthode du gradient, c'est-à-dire en réalisant successivement:
     - l'initialisation du programme par introduction de l'équation Y et de la valeur N par rapport à laquelle Y est défini,
     - l'introduction des dérivées partielles $D[X_{(i)}] = \partial Y/\partial X_i$ de Y par rapport à un premier paramètre $X_i$ -puis les valeurs limites et l'algorithme du gradient avec une valeur prédéterminée, la même pour tous les X,
     - la détermination du sens de l'influence sur Y d'une première variation de l'ensemble des paramètres avant d'effectuer la recherche de l'optimum, par application de l'algorithme du gradient,
     étant entendu que le logigramme, d'une part, réduit le coefficient multiplicateur appliqué à la dérivée lorsque la dernière itératlon précédente amène à dépasser le rayon de validité et recommence le même calcul, mais avec la valeur réduite et, d'autre part; limite le nombre de parcours de la boucle en arrêtant les itérations, dès que Y est ramenée dans l'intervalle de valeurs limité par N, et
   - à l'actionnement d'autant d'organes de réglage que de paramètres, en fournissant à chacun de ces organes de réglage un signal propre à amener la variable ou paramètre qui lui est associé à la valeur correspondant à la susdite solution de l'équation prévisionnelle Y la plus économique et la plus facile à obtenir.

2. Procédé selon la revendication 1, caractérisé par le fait que l'on effectue l'ensemble des calculs à l'aide d'une calculatrice numérique que l'on munit de bases de données appropriées.

3. Procédé selon l'une des revendications 1 et 2, caractérisé par le fait que l'on calcule les modifications à impartir aux variables ou paramètres par le processus représenté sur les figures 4a-4c.

**Claims**

1. Method adapted to enable:
   - on the one hand, to know, from the measurement of various developing parameters of a developing chemical medium, the particularities of the result to which the medium concerned leads at the moment selected,
   - on the other hand, in the case where the value found by this measurement shows that the result concerned does not correspond to that desired, which must be comprised within a range of values limited by at least one value N fixed in advance, to determine first of all a set of modifications of the variables or parameters of the medium, the said set being proper to arrange so that the result to which the thus modified medium will lead, corresponds to that desired, then to apply this set of modifications to the developing chemical medium concerned, by action on the parameters concerned,
   this method, which comprises the steps:
   - of, on the one hand, in a first time, establishing for the result to which this medium leads, a so-called predictional equation Y,
   - of, on the other hand, the equation Y being established, of the use of said equation for the regulation of the developing chemical medium in proceeding
   - to the repetitive measuring of the value of each of the said variables or parameters by as many probes or detectors and
   - to the calculation after each of said repetitive measurings of the value of Y by introduction of the values measured for the various variables or parameters in the predictional equation,
   being characterized by the fact the predictional equation is of the type

$$Y = b_0 + b_1 X_1 + b_2 X_2 \ldots + b_k X_k + \ldots + b_n X_n + b_{12} X_1 X_2 + \ldots + b_{k-1,k} X_{k-1} X_k + \ldots + b_{kk} X_k^2 + \ldots + b_{nn} X_n^2 + \ldots$$

   in which
   - Y represents the result to which the medium leads,
   - $X_1$, $X_2$ .. $X_k$, ... $X_n$ represent the adjustable variables or parameters of the developing chemical medium from which the result Y depends and
   - $b_0$, $b_1$ ... $b_k$, ..., $b_{nn}$ are coefficients with respect to which the linearity of the equation is expressed, the value of these coefficients being determined by calculations based on regression methods known in themselves, and by the fact that it is proceeded:
   - to the determination by calculation, if the value found for Y does not correspond to the desired result, of all sets of variations or modifications to be imparted to the variables or parameters of the predictional equation adapted to provide the desired value for Y and to select, among all these sets of variations or modifications, that is to say among all of the possible corresponding solutions of the predictional equation Y, the one which is the most economical and the easiest to carry out having recourse to the gradient method, that is to say in carrying out successively:
   - the initialization operation of the program by introduction of the equation Y and of the value N in respect to which Y is defined,
   - the introduction of the partial derivatives $D[X_{(i)}] = \delta Y / \delta X_i$ of Y with respect to a first parameter $X_i$, then the limit values and the algorithm of the gradient with a predetermined value, the same for all the Xs,
   - the determination of the direction of the influence on Y of a first variation of the set of parameters before carrying out the search for the optimum, by the application of the algorithm of the gradient,
   being understood that the logigram, on the one hand, reduces the multiplier coefficient applied to the derivative when the preceding latter iteration leads to exceeding the validity radius and recommences the same calculation, but with the reduced value and, on the other hand, limits the number of passages through the loop by stopping the iterations as soon as Y is brought back into the range of values limited by N, and

- to the action of as many regulating members as parameters, providing each of these regulating members with a signal adapted to bring the variable or parameter associated therewith to the value corresponding to the abovesaid solution of the predictional equation Y, which is the most economical and the most easy to obtain.

2. Method according to claim 1, characterized by the fact that the set of the calculations is carried out by means of a digital computer which is supplied with suitable data bases.

3. Method according to one of claims 1 and 2, characterized by the fact that the modifications to be imparted to the variables or parameters are calculated by the process represented in Figures 4a-4c.

**Patentansprüche**

1. Verfahren, welches
ausgehend von der Messung verschiedener, sich verändernder Parameter eines sich verändernden, chemischen Mediums, einerseits die Kenntnis der Eigenschaften des Ergebnisses ermöglicht, zu dem das betreffende Medium im gewählten Zeitpunkt führt,
und es in dem Fall, daß der durch diese Messung gefundene Wert zeigt, daß das betreffende Ergebnis nicht dem erwünschten Ergebnis entspricht, welches in einem durch wenigstens einen vorher festgelegten Wert N begrenzten Intervall von Werten liegen muß, andererseits ermöglicht, zuerst eine Gesamtheit von Variablen- oder Parametermodifikationen des Mediums zu bestimmen, welche geeignet ist, zu bewirken, daß das Ergebnis, zu dem das derart modifizierte Medium führen wird, dem erwünschten entspricht, und dann das Vornehmen dieser Gesamtheit von Modifikationen an dem betreffenden, sich verändernden chemischen Medium durch Einwirkung auf die betroffen Parameter ermöglicht,
wobei dieses Verfahren, welches die Schritte umfaßt:
einerseits in einem ersten Zeitpunkt die Aufstellung einer sogenannten prognostischen Gleichung Y für das Ergebnis, zu dem dieses Medium führt,
andererseits die Verwendung der aufgestellten Gleichung Y für die Regelung des sich verändernden, chemischen Mediums, indem
in sich wiederholender Weise die Messung jeder der Variablen oder Parameter durch ebensoviele Meßfühler oder Sensoren durchgeführt wird und
nach Abschluß jeder der sich wiederholenden Messungen die Berechnung des Werts von Y durchgeführt wird, indem in die prognostische Gleichung die für die verschiedenen Variablen oder Parameter gemessenen Werte eingesetzt werden,
dadurch gekennzeichnet, daß
die prognostische Gleichung die Form

$$Y = b_0 + b_1 X_1 + b_2 X_2 + ... + b_k X_k + ... + b_n X_n + b_{12} X_1 X_2 + ... + b_{k-1,k} X_{k-1} X_k + ... + b_{kk} X_k^2 + ... + b_{nn} X_n^2 + ...$$

aufweist, wobei
Y das Ergebnis repräsentiert, zu dem das Medium führt,
$X_1, x_2 ... X_k, ... X_n$ die regelbaren Variablen oder Parameter des sich verändernden, chemischen Mediums repräsentieren, von denen das Ergebnis Y abhängt, und
$b_0, b_1 ... b_k, ... b_n$ Koeffizienten sind, in denen sich die Linearität der Gleichung ausgedrückt, wobei deren Wert durch Berechnungen bestimmt ist, die auf an sich bekannten Regressionsverfahren beruhen,
und dadurch, daß
dann, wenn der gefundene Wert für Y nicht dem gewünschten Ergebnis entspricht, durch die Berechnung alle an den Variablen oder Parametern der prognostischen Gleichung vorzunehmenden Variations- oder Modifikationsgesamtheiten bestimmt werden, welche geeignet sind, Y den gewünschten Wert zu geben und unter allen diesen Variations- oder Modifikationsgesamtheiten, d.h. unter allen möglichen entsprechenden Lösungen der prognostischen Gleichung Y, diejenige auszuwählen, welche die wirtschaftlichste und die am einfachsten zu realisierende ist, indem auf das Gradientenverfahren zurückgegriffen wird, d.h. indem aufeinanderfolgend durchgeführt wird:

die Initialisierung des Programms durch Einführen der Gleichung Y und des diese festlegenden Werts N,

die Einführung der partiellen Ableitungen $D[X(i)] = \partial Y/\partial X_i$ von Y nach einem ersten Parameter $X_i$, dann der Grenzwerte und des Gradientenalgorithmus mit einem vorbestimmten Wert, was für alle X durchgeführt wird,

die Bestimmung der Richtung des Einflusses einer ersten Variation der Parametergesamtheit auf Y vor Durchführen der Suche nach dem Optimum durch Anwendung des Gradientenalgorithmus,

wobei der Logikplan wohlgemerkt einerseits den auf die Ableitung angewendeten Multiplikationskoeffizienten verkleinert, wenn die letzte vorhergehende Iteration zum Verlassen des Gültigkeitsbereichs führt, und die gleiche Berechnung, jedoch mit dem verkleinerten Wert, wiederbeginnt und andererseits die Zahl der Schleifendurchgänge begrenzt, indem die Iterationen gestoppt werden, sobald Y in das durch N begrenzte Intervall der Werte gebracht ist, und

ebensoviele Regelelemente wie vorhandene Parameter betätigt werden, indem jedem dieser Regelelemente ein Signal geliefert wird, welches geeignet ist, die ihm zugeordnete Variable oder den Parameter auf den Wert zu bringen, welcher der wirtschaftlichsten und am einfachsten zu erzielenden Lösung der prognostischen Gleichung Y entspricht.

2. Verfahren nach Anspruch 1, dadurch gekennzeichnet, daß die Gesamtheit der Berechnungen mit Hilfe einer numerischen Rechenmaschine durchgeführt wird, welche mit geeigneten Datenbanken ausgestattet ist.

3. Verfahren nach einem der Ansprüche 1 und 2, dadurch gekennzeichnet, daß die an den Variablen oder Parametern vorzunehmenden Modifikationen durch den in den Figuren 4a-4c dargestellten Vorgang berechnet werden.

FIG.1.

FIG.2.

DEBUT

Introduire N : nombre de facteurs expérimentaux X(i)

Introduire I, J : indices des facteurs X(i) variables

K = 0

K=I ou K=J → non → Introduire la valeur affectée au paramètre X(K)

oui

K = N ← non ← K = K + 1

oui

Introduire l'équation de la fonction-réponse Y :

$$Y = b_0 + \sum_{i=1}^{N} bi\ X(i) + \sum_{i=1}^{N}\sum_{j=1}^{N} b_{ij}\ X(i)\ X(j) + \ldots$$
$$i<j$$

20

Introduire les valeurs limites des facteurs variables  X(I)  X(J) :

$X(I)_{MIN}$        $X(J)_{MIN}$

$X(I)_{MAX}$        $X(J)_{MAX}$

22

FIG.3a.

Introduire un facteur d'échelle pour $X(I):X(I)_L$
pour $X(J):X(J)_L$

$$X(I)_L : \frac{X(I)_{MAX} - X(I)_{MIN}}{P}$$

$$X(J)_L : \frac{X(J)_{MAX} - X(J)_{MIN}}{Q}$$

(P, Q) dimensions de la grille

24

26

$X(I) = X(I)_{MIN}$
$X(J) = X(J)_{MIN}$

$U = 0$
$V = 0$

$X(I) = X(I)_{MIN} + U = X(I)_L$
$X(J) = X(J)_{MIN} + V = X(J)_L$

$Y(U,V) = Y$

$V = Q$

non → $V = V + 1$

oui

$U = P$

non → $U = U + 1$

oui

28

FIG.3b.

Introduire :

  NB : nombre d'isoréponses

  $Y_I$ : valeur initiale de Y

  $Y_L$ : pas de variation de Y

  DY : écart sur Y

30

K = 0
U = P
V = Q

32

$Y(U,V) < Y_I + K = Y_L - DY$    non    $Y(U,V) > Y_I + K = Y_L + DY$    non

oui    oui

V = Q - 1   non   V = 0

oui

U = P - 1   non   U = 0

oui

K = K + 1   non   $K = N_B - 1$

oui

FIN

mémorisation de la valeur Y(U,V) dans la grille.

FIG.3c.

20

$$\text{DEBUT}$$

Introduire N : nombre de facteurs expérimentaux X

Introduire équation de la fonction-réponse Y

$$Y = b_0 + \sum_{i=1}^{N} b_i \, X(i) + \sum_{i=1}^{N} \sum_{\substack{j=1 \\ i<j}}^{N} b_{ij} \, X(i) \, X(j)$$

Introduire les dérivées partielles D[x(i)] de Y
par rapport à chacun des paramètres X(i)

$$D[X(i)] = \frac{\partial Y}{\partial X_i}$$

—34

—36

Introduire :
   R  : rayon du domaine de validité de la fonction Y
   L  : facteur multiplicatif tel que
       M(I+1) = M(I) + L * grad Y(I)
  DL : limite inférieure de L
  DY : limite inférieure de l'accroissement de Y
       à partir duquel l'optimisation doit s'arrêter

Introduire les coordonnées du point initial [valeur mesurée des X(i)]

Calcul de Y et de ses dérivées au point initial

Introduire JT : nombre maximum d'itérations

Y(o) = Y

J = 1

FIG.4a.

XP (J, 0) = X(J)

X(J) = X(J) + L * D[Y(J)]
XP (J, 1) = X(J)

J = N — non → J = J + 1

oui

Calcul de Y (IT = 1) et de ses dérivées partielles
Y(1) = Y

Y(1) < Y(0) — oui → L = -L

non

38

J = 1

X(J) = XP(J, 1)

J = N — non → J = J + 1

oui

IT = 1

42

Y(IT) - Y(IT-1) < DY — oui → envoi des valeurs de consigne appropriées → FIN

non

T = 0

FIG.4b.

FIG.4c.

FIG.5.

FIG.6.

FIG.7.